# EUROPÄISCHE PATENTSCHRIFT

(11) **EP 1 927 506 B1**
(45) Veröffentlichungstag und Bekanntmachung des Hinweises auf die Patenterteilung: **17.11.2010**
(21) Anmeldenummer: 07015926.4
(22) Anmeldetag: 14.08.2007
(51) Int. Cl.: B60P 7/135, B60P 7/08

(54) **Fahrzeugrahmen mit Querträgern zur Ladungssicherung und Querträger hierfür**
Vehicle frame with cross-members for securing a load and cross-members therefor
Châssis de véhicule doté de traverses pour sécuriser le chargement et traverses

(30) Priorität: 30.11.2006 DE 102006056497
(43) Veröffentlichungstag der Anmeldung: 04.06.2008
(73) Patentinhaber: Elting, Franz, 46395 Bocholt-Liedern (DE)
(72) Erfinder: Elting, Franz, 46395 Bocholt-Liedern (DE)
(74) Vertreter: Habbel, Ludwig

(56) Entgegenhaltungen:
- EP-A- 0 856 450
- EP-A- 1 193 124
- DE-C1- 19 824 678
- DE-U1- 8 800 572
- US-A- 2 494 404
- US-A- 3 070 042
- US-A- 3 856 344

## Beschreibung

Die Erfindung betrifft einen Fahrzeugrahmen nach dem Oberbegriff des Anspruchs 1.

Aus der Praxis sind Fahrzeugrahmen von Lastkraftwagen und von Fahrzeuganhängern bekannt, bei denen zur Ladungssicherung umfangreiches Zubehör in Form von entfernbaren Schottwänden, Spanngurten od. dgl. verwendet werden kann. Dieses Zubehör, welches zur Durchführung der gesetzlich vorgeschriebenen Ladungssicherungspflicht erforderlich ist, reduziert aufgrund seines Eigengewichtes die vom Fahrzeug transportierbare Nutzlast, was wirtschaftlich nachteilig ist.

Aus der DE 88 00 572 U1 ist kein Fahrzeugrahmen, sondern eine auf einem Fahrzeug lösbar montierbare Transportunterlage bekannt, die ihrerseits Sicherungselemente zur Ladungssicherung aufnehmen kann.

Aus der EP 1 193 124 A2 ist ein Fahrzeug bekannt, bei dem als Teil des Ladebodens, also zusätzlich zum Fahrzeugrahmen, Längsprofile vorhanden sind, welche niedrige, klotzförmige Sicherungselemente aufnehmen können.

Aus der EP 0 856 450 A1, die den Oberbegriff des Anspruchs 1 zeigt, ist ein Fahrzeug bekannt, bei dem als Teil des Ladebodens, also zusätzlich zum Fahrzeugrahmen, Querprofile vorhanden sind, welche niedrige, liegend angeordnete stangenförmige Sicherungselemente aufnehmen können und die jeweils paarweise miteinander fluchtend und mit Abstand zueinander quer verlaufend im Ladeboden angeordnet sind.

Aus der DE 198 24 678 C1 sowie der US-A 2 494 404 ist jeweils ein Fahrzeug mit einem gattungsgemäßen Fahrzeugrahmen bekannt, bei dem als Teil des Ladebodens, also zusätzlich zum Fahrzeugrahmen, Querprofile vorhanden sind, welche niedrige, liegend angeordnete stangenförmige Sicherungselemente aufnehmen können.

Aus der DD 66 367 ist ein Fahrzeugrahmen bekannt, der zum Transport von Rohren großen Durchmessers dient, wobei je nach Länge des Rahmens zwei oder drei Rohre transportiert werden können und die Rohre quer auf dem Fahrzeug liegen. Hinter jedem Rohr ist ein Paar von Rungen vorgesehen, um das davor liegende Rohr daran zu hindern, nach hinten vom Fahrzeugrahmen herabzurollen. Das hintere Rungenpaar kann aus seiner aufrechten Sicherungsstellung abgeklappt werden, um eine Art Rampe zu bilden, welche die Längsträger des Fahrzeugrahmens nach hinten verlängert und als schiefe Ebene zum Aufrollen bzw. Herabrollen der Rohre dient.

Damit diese Rampe nicht zu steil ist, werden die hinteren beiden Rungen mittels zweier Verlängerungsstücke verlängert, die in die als Kastenprofil ausgestalteten hinteren beiden Rungen eingesteckt werden können. Sie werden nur zum Be- und Entladen des Fahrzeugrahmens benötigt und ansonsten in einer Halterung am Fahrzeugrahmen untergebracht.

Zwei Querträger des Fahrzeugrahmens, die in Fahrzeuglängsrichtung hintereinander angeordnet sind, weisen Ausnehmungen auf, um mittels dieser Ausnehmungen die erwähnten beiden Halterungen für die beiden Verlängerungsstücke zu bilden.

Der Fahrzeugrahmen der DD 66 367 ist als eine Art Leiter- oder Gitterkonstruktion ausgestaltet, ohne flächige Elemente wie einen Ladeboden oder dergleichen, da die zu transportierenden Rohre auch auf den das "Gitter" bildenden Längs- und Querträgern des Fahrzeugrahmens problemlos transportiert werden können.

Die Sicherung der Ladung mittels Rungen ist grundsätzlich bekannt, z. B. aus dem Bereich des Transports von Langholz oder Rohren kleineren Durchmessers. Die Rungen sind üblicherweise, wie auch bei der erwähnten DD 66 367, seitlich außerhalb der Längsträger des Fahrzeugrahmens angeordnet. Bei dem Transport von Langholz oder Rohren kleineren Durchmessers wird das Ladegut in Längsrichtung des Fahrzeugs angeordnet und gegen seitliches Verrutschen / Herabrollen gesichert.

Sowohl bei den quer auf dem Fahrzeug transportierten Rohren gemäß der DD 66 367 als auch bei den aus der Praxis bekannten längs transportierten Langhölzern bzw. Rohren kleineren Durchmessers ist die Kontur der Ladung vergleichsweise konstant, so dass die an fest vorgegebenen Stellen vorgesehenen Rungen eine optimale Sicherung der Ladung ermöglichen. Zudem werden derartige Ladungen üblicherweise an einer Annahmestelle komplett gelöscht, das Fahrzeug also vollständig entladen.

Anders ist die Situation, wenn Stückgut unterschiedlicher Abmessungen geladen und zu mehreren Annahmestellen transportiert werden soll: abgesehen von den ohnehin unterschiedlichen Abmessungen solcher Stückgut-Ladungen muss nach einer erten und jeder weiteren Teil-Entladung der jeweils verbleibende Rest der Ladung zur nächsten Annahmestelle-weiter transportiert werden, so dass die nun jeweils kleiner gewordene Ladung eine andere Kontur aufweist und dementsprechend auch wieder neu, an die geänderten Abmessungen angepasst, gesichert werden muss. Aus diesem Grund muss das vielfältige, eingangs erwähnte Zubehör mitgeführt werden.

Der Erfindung liegt die Aufgabe zugrunde, einen gattungsgemäßen Fahrzeugrahmen dahingehend zu verbessern, dass dieser mit möglichst geringem zusätzlichen Materialaufwand und mit dementsprechend möglichst geringem Gewicht die Sicherung von mit dem Fahrzeug transportierter Ladung unterschiedlicher Abmessungen zuverlässig ermöglicht.

Diese Aufgabe wird durch einen Fahrzeugrahmen mit den Merkmalen des Anspruchs 1 gelöst.

Die Erfindung schlägt mit anderen Worten vor, den Fahrzeugrahmen selbst zur Aufnahme von Sicherungselementen auszugestalten. Hierzu sind in den ohnehin erforderlichen Querträgern Ausnehmungen vorgesehen, in welche Sicherungselemente eingesteckt werden können, die zur Ladungssicherung dienen. Da bei einem Fahrzeugrahmen mehrere von Querträgern und vorschlagsgemäß in jedem Querträger eine Vielzahl von Ausnehmungen vorgesehen ist, ergibt sich eine matrix- bzw. rasterartige Anordnung einer Vielzahl von Stellen, an denen jeweils ein Sicherungselement angeordnet werden kann, so dass Ladungen mit unterschiedlichsten Abmessungen optimal gesichert werden können. Bei Änderungen an den Abmessungen der Ladung werden die Sicherungselemente einfach umgestäckt.

Vorschlagsgemäß weist der Querträger nach oben offene Ausnehmungen auf, so dass die Sicherungselemente von oben in den Querträger eingesteckt werden können. Auf diese Weise kann der übrige Fahrzeugboden bis dicht an die Querträger herangezogen werden, so dass die Anzahl von Spalten oder Löchern im Ladeboden des Fahrzeuges möglichst gering gehalten werden kann.

Vorteilhaft kann der Querträger als U-Profil ausgestaltet sein, so dass die Sicherungselemente von oben in den Querträger eingesteckt werden können. Die möglichst ebene Ausgestaltung des Ladebodens kann dadurch erfolgen, dass an den beiden Wandabschnitten des U-förmig profilierten Querträgers nach außen ragende Auflagestreifen vorgesehen sind, auf welchen der benachbarte Abschnitt des Ladebodens aufliegt, beispielsweise in Form von Fahrzeugplatten oder ähnlichen an sich bekannten Elementen, die zur Herstellung eines Ladebodens bei einem LKW oder einem LKW-Anhänger verwendet werden.

Die Höhe des Auflagestreifens an den seitlichen Wandabschnitten des U-förmig profilierten Querträgers ist vorzugsweise so bemessen, dass in Anpassung an die zur Herstellung des Ladebodens verwendeten Elemente ein bündiger Anschluss des benachbarten Ladebodenabschnitts an den Querträger erfolgt, so dass einerseits Ladung problemlos auf dem Ladeboden verschoben werden kann und andererseits der Ladeboden auch problemlos mit Flurförderfahrzeugen befahren werden kann, beispielsweise Handhubgeräten, Gabelstaplern od. dgl.

Da durch die Ausnehmungen Verunreinigungen oder Feuchtigkeit in den Querträger gelangen können, insbesondere wenn die Ausnehmungen nach oben offen sind, können vorteilhaft Ablauföffnungen im Querträger vorgesehen sein, die nach unten offen sind. Abgesehen davon, dass die Ablauföffnungen Schmutz und Feuchtigkeit abzuführen helfen, unterstützen sie auch eine Belüftung des Querträger-Inneren, so dass stehende Feuchtigkeit und somit Korrosionsprobleme vermieden bzw. reduziert werden.

Vorteilhaft können die Ablauföffnungen unterhalb der Ausnehmungen im Querträger vorgesehen sein, so dass durch die Ausnehmungen in das Innere des Querträgers gelangende Verunreinigungen oder Feuchtigkeit unverzüglich schwerkraftunterstützt abgeführt und aus dem Querträger herausgeführt werden können, unabhängig davon, ob es sich bei dem Querträger um ein U-Profil, ein Kastenprofil oder anderweitig einen Innenraum aufweisende Profile handelt.

Der U-förmig profilierte und dementsprechend an seiner Oberseite offene Querträger kann beispielsweise durch eine Art Lochblech oben abgeschlossen werden, so dass die mehreren Löcher mehrere Ausnehmungen im Querträger schaffen, in welche die Sicherungselemente eingesetzt werden können. Durch ein derartiges Lochblech können mit wenigen Schweißnähten und wenigen zu handhabenden Bauteilen eine Vielzahl von Ausnehmungen geschaffen werden. Eine Kippbeweglichkeit des Sicherungselementes kann in einem derartigen Fall auf einfache Weise dadurch sichergestellt werden, dass das Sicherungselement zwei Füße aufweist, die in zwei derartige Ausnehmungen des Querträgers eintauchen.

Wenn pfostenartige Sicherungselemente mit nur einem Fuß Verwendung finden sollen, können vorteilhaft Führungselemente im Querträger vorgesehen sein, die auch über eine gewisse Höhe das Sicherungselement führen, beispielsweise können vertikale Trennbleche in den Querträger eingesetzt werden, die als Führungselemente dienen, oder es können Querbolzen, die quer zum Querträger und somit in Fahrzeuglängsrichtung verlaufen, in einer oberen und in einer unteren Höhe des Querträgers vorgesehen sein, und zwar beiderseits der Ausnehmung, so dass auf diese Weise durch die Seitenwandabschnitte und durch diese Führungselemente das in den Querträger eingesetzte Sicherungselement zuverlässig und möglichst kippsicher geführt ist.

Vorteilhaft können die Querträger aus Metall bestehen und die Führungselemente mit dem übrigen Querträger verschweißt sein, so dass bekannte Fertigungstechnologien angewendet werden können, die eine zuverlässige Verbindung der Bauteile ermöglichen und im Vergleich beispielsweise zu Verschraubungen möglichst wenig Platz benötigen.

Vorteilhaft kann ein fester Verbund des Fahrzeugrahmens sowie ein möglichst niedriger Schwerpunkt des Fahrzeugrahmens dadurch ermöglicht werden, dass Quer- und Längsträger nicht übereinander angeordnet sind, sondern sich regelrecht durchkreuzen. Zu diesem Zweck kann in den Querträgern die Anordnung von Aussparungen vorgesehen sein, die bei mehreren hintereinander angeordneten Querträgern miteinander fluchten, so dass der Längsträger durch diese Aussparungen verlaufen kann. Eine optimale Anpassung an die Querschnittsgeometrie der Längsträger ist vorteilhaft vorgesehen, um einerseits die Aussparungen im Querträger so klein wie möglich zu halten, also die Festigkeit des Querträgers so hoch wie möglich zu behalten, und um andererseits eine Verschweißung unmittelbar zwischen dem Querträger und den Längsträgern zu ermöglichen, so dass aufgrund der exakten Anpassung der Aussparungen an die Querschnittsgeometrie der Längsträger Spaltmaße zwischen Längs- und Querträgern von so geringer Breite vorliegen, dass eine unmittelbare Verschweißung, ohne Knotenbleche, zusätzliche Laschen od. dgl., möglich ist. Die Aussparungen können beispielsweise vorteilhaft etwa T-förmig ausgestaltet sein, in Anpassung an die im Fahrzeugbau üblichen Doppel-T-Träger, so dass der Längsträger beispielsweise etwa mit seiner oberen Hälfte durch den Querträger verläuft.

Es kann vorteilhaft sein, dass der Querträger mit dem übrigen Fahrzeugrahmen verschraubt ist. Dies ermöglicht eine Fertigung ohne Schweißnähte zwischen Längs- und Querträgern, so dass entsprechend eingerichtete Fertigungsabläufe nicht geändert werden müssen, um vorschlagsgemäße Querträger verwenden zu können. Zudem können Materialien verwendet werden, für die eine Schweißverbindung problematisch wäre.

Vorteilhaft kann vorgesehen sein, dass der Querträger aus einem höherfesten Material besteht als die Längsträger, so dass z. B. hochfester Stahl für die Querträger verwendet werden kann. Hierdurch kann der Querträger aus dünnerem Material gefertigt und so das Gewicht des Fahrzeugrahmens niedrig gehalten werden.

Insbesondere bei einer ungeschweißten Verbindung der Querträger mit den Längsträgern, z. B. durch die vorerwähnte Verschraubung, werden Spannungsrisse bei der Belastung und Verformung des Fahrzeugrahmens im späteren Betrieb weitestgehend vermieden, so dass die Kombination unterschiedlich fester Stähle unproblematisch ist.

Die vorschlagsgemäß ausgestalteten Querträger können als separates Handelsgut genutzt werden, um bei bestehenden Fahrzeugproduktionen nur durch Verwendung der entsprechenden Querträger eine vorteilhafte vorschlagsgemäße Ausgestaltung des Fahrzeugrahmens zu ermöglichen.

Ein Ausführungsbeispiel der Erfindung wird anhand der rein schematischen Darstellungen nachfolgend näher erläutert. Dabei zeigt
- Fig. 1: eine schematische Seitenansicht auf einen LKW-Anhänger mit darauf befindlicher und gesicherter Ladung,
- Fig. 2: eine Draufsicht auf den Rahmen des Fahrzeugs von Fig. 1,
- Fig. 3: eine Ansicht in Längsrichtung des Fahrzeuganhängers auf einen Querträger,
- Fig. 4: eine Draufsicht auf den Querträger von Fig. 3.

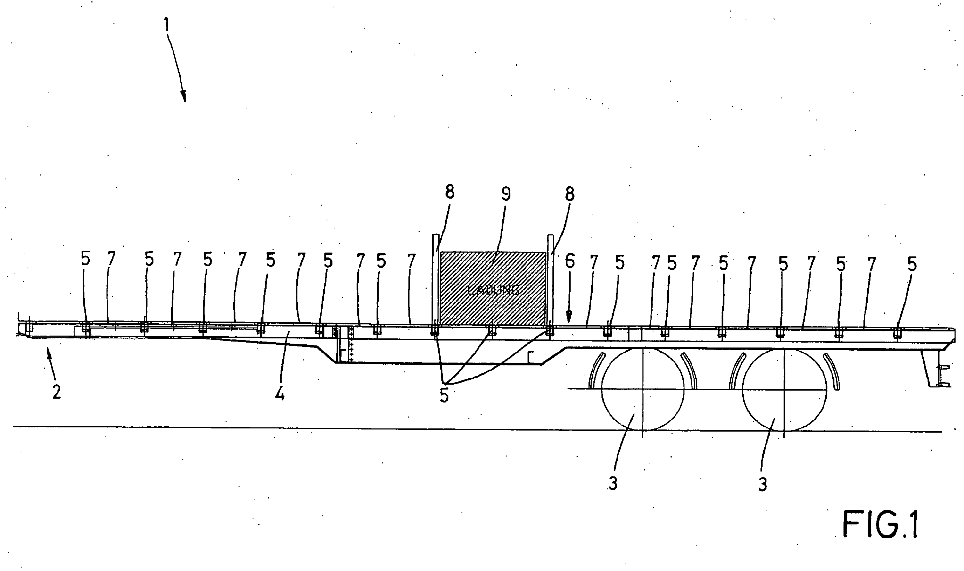

In den Zeichnungen ist mit 1 insgesamt ein Fahrzeugrahmen bezeichnet, wobei in Fig. 1 ein LKW-Anhänger in Form eines Aufliegers dargestellt ist, mit einem durch seine Mittelachse angedeuteten Königszapfen 2 und Laufrädern 3. Der Fahrzeugrahmen 1 weist zwei Längsträger 4 auf sowie eine Vielzahl von Querträgern 5. Die Querträger 5 schließen oben bündig mit dem übrigen Ladeboden 6 des Aufliegers ab, wobei der Ladeboden 6 aus mehreren Ladebodenabschnitten 7 gebildet wird, die sich jeweils zwischen zwei benachbarten Querträgern 5 erstrecken. Zwei Sicherungselemente 8 sind in Fig. 1 dargestellt. Es handelt sich dabei um pfostenartige Sicherungselemente 8, die als Vierkantrohr ausgestaltet sind und beispielsweise ein Seitenmaß von 70 mm aufweisen. Sie sind von oben in die Querträger 5 eingesteckt und sichern eine Ladung 9, indem sie vor und hinter der Ladung angeordnet sind. Seitlich neben der Ladung können ebenfalls Sicherungselemente 8 vorgesehen werden und beispielsweise in den Querträger 5 eingesteckt werden, der zwischen den Sicherungselementen 8 unterhalb der Ladung 9 verläuft, wenn die Ladung entsprechend schmal bemessen ist, so dass dieser mittlere Querträger 5 seitlich neben der Ladung 9 das Anbringen der Sicherungselemente 8 ermöglicht.

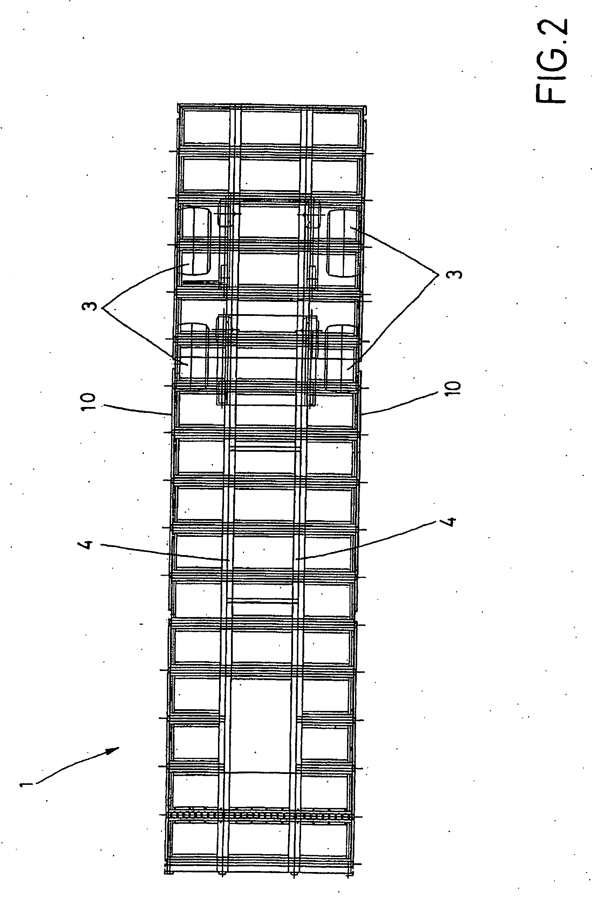

Fig. 2 zeigt eine Draufsicht auf den Fahrzeugrahmen 1 des Aufliegers von Fig. 1:

In Fig. 2 ist eine Draufsicht bei abgenommenen Ladebodenabschnitten zu sehen, so dass die Längsträger 4 sichtbar sind sowie Seitenbleche 10 des Fahrzeugrahmens 1 an den beiden Außenseiten der Querträger 5. Lediglich einer der Querträger 5 ist in Fig. 2 etwas detaillierter dargestellt.

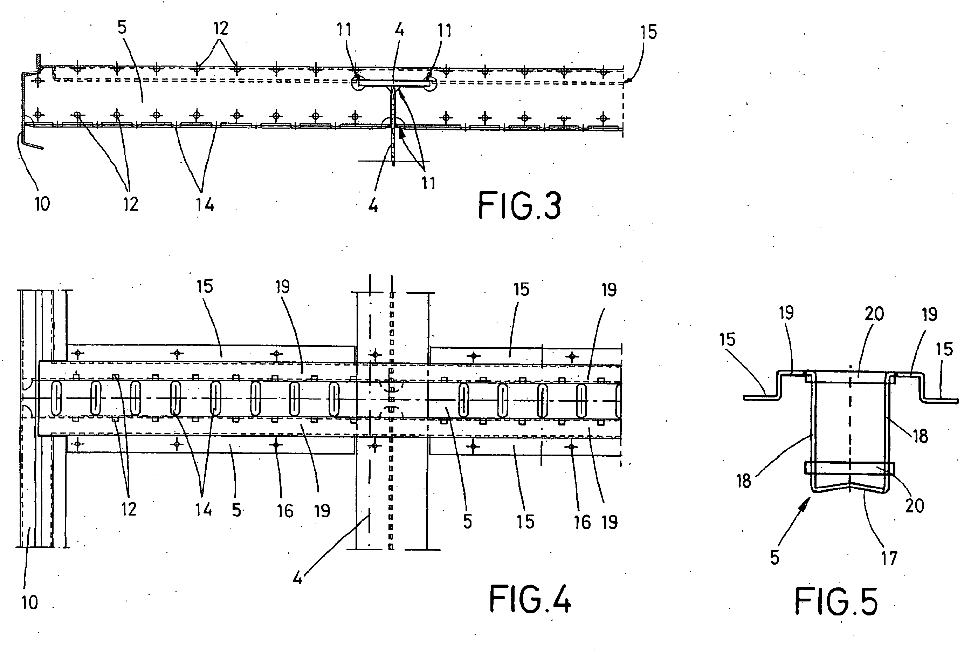

Fig. 3 zeigt einen Schnitt, der längs durch den Querträger 5 verläuft, also mit Blickrichtung in Längsrichtung des Fahrzeugrahmens. Ein Seitenblech 10 ist im Schnitt erkennbar und ebenso ein Anteil eines der beiden Längsträger 4. Der Querträger 5 weist zur Aufnahme des Längsträgers 4 eine T-förmige Aussparung 11 auf, die an ihren drei Enden jeweils kreisförmig erweitert ist und am Übergangspunkt ihrer beiden Hoch-und Querschlitze abgeschrägt, sich nach oben V-förmig erweiternd verläuft, um Spannungsrisse und das Auftreten von Kerben zu vermeiden. Ansonsten liegt die Aussparung 11 dem Längsträger 4 vergleichsweise nah an, so dass der Längsträger 4 unmittelbar, also ohne zwischengeschaltete Bauteile, wie Verbindungslaschen od. dgl., mit dem Querträger 5 verschweißt werden kann.

Weiterhin weist der Querträger 5 eine Vielzahl von Bohrungen 12 auf, durch welche sich später noch näher erläuterte Bolzen erstrecken.

An der Unterseite des Querträgers 5 ist eine Vielzahl von Ablauföffnungen 14 vorgesehen, durch welche in den Querträger 5 gelangte Verschmutzungen und Feuchtigkeit aus dem Träger schwerkraftunterstützt abgeführt werden können.

Fig. 4 zeigt eine Draufsicht auf den Querträger 5 von Fig. 3. Es ist erkennbar, dass auf beiden Seiten des Querträgers 5 Auflagestreifen 15 vorgesehen sind, auf welche die Ladebodenabschnitte 7 aufgelegt werden können, wobei Montagebohrungen 16 in den Auflagestreifen 15 vorgesehen sind, um eine Verschraubung der Ladebodenabschnitte 7 mit den Querträgern 5 zu ermöglichen.

Fig. 5 zeigt einen Querschnitt durch einen Querträger 5. Es ist erkennbar, dass der Querträger 5 im wesentlichen U-förmig profiliert ist. Er weist einen Bodenabschnitt 17 auf, der leicht nach oben, also in das Innere des Querträgers 5 hin abgewinkelt verläuft, sowie zwei seitliche Wandabschnitte 18, die an ihrer Oberseite gekantet sind, auf beiden Seiten des Querträgers 5 jeweils einen schmalen Kragen 19 ausbilden und dann zweifach abgekantet sind, um die Auflagestreifen 15 auszubilden.

In die unteren und oberen Bohrungen 12 sind Bolzen 20 eingesetzt und mit dem übrigen Querträger 5 verschweißt. Jeweils vier derartige Bolzen bilden die Führung für ein Sicherungselement 8, indem dieses Sicherungselement 8 zwischen die beiden oberen Bolzen eingesteckt und bis zwischen die beiden unteren Bolzen 20 abgesenkt und auf den Bodenabschnitt 17 des Querträgers 5 aufgestellt wird. Durch diese vier Bolzen 20 und die beiden Wandabschnitte 18 ist das Sicherungselement 8 allseitig gegen horizontale Kräfte und Kippbewegungen gesichert.

In der Draufsicht auf einen Querträger 5 ergibt sich daher eine Vielzahl von Ausnehmungen, die jeweils zur Aufnahme eines Sicherungselementes 8 genutzt werden können, wobei jeweils eine solche Ausnehmung zwischen zwei benachbarten Bolzen 20 geschaffen ist.

Alternativ zur Handhabung der Vielzahl einzelner Bolzen 20 kann vorgesehen sein, auf der Oberseite des Querträgers 5 ein leiterartiges Blech anzuordnen, welches an seinen beiden Längsholmen mit dem übrigen Querträger 5 verschweißt werden kann, beispielsweise mit dem Kragen 19, wobei dann die Sprossen dieses leiterartigen Blechzuschnittes die Bolzen 20 ersetzen würden.

Alternativ dazu kann vorgesehen sein, vertikale Führungsbleche im Querträger 5 vorzusehen, welche statt der zwei übereinander angeordneten Bolzen die Führung für die Sicherungselemente 8 schaffen.

## Patentansprüche

1. Fahrzeugrahmen,
mit Längs- und Querträgern (4,5),
wobei Querträger (5) vorgesehen sind, welche nach oben offene Ausnehmungen aufweisen,
und wobei Sicherungselemente (8) vorgesehen sind, welche zur Ladungssicherung dienen,
wobei über die Länge des Querträgers (5) eine Vielzahl von Ausnehmungen vorgesehen ist,
derart, dass die Sicherungselemente (8) an die Ladung (9) grenzend von oben in eine Ausnehmung eines Querträgers (5) einsteckbar sind,
und wobei ein Ladeboden (6) zur Aufnahme von Ladung (9) vorgesehen ist, welcher auf gleicher Höhe oder höher angeordnet ist als die Querträger (5),
**dadurch gekennzeichnet,**
**dass** der Fahrzeugrahmen (1) selbst zur Aufnahme der Sicherungselemente (8) ausgestaltet ist,
wobei die Sicherungselemente (8) pfostenartig ausgestaltet sind,
in ihrer aufrechten Sicherungsstellung in den Ausnehmungen des Querträgers (5) angeordnet sind,
und wahlweise vor, hinter, und / oder seitlich neben der Ladung (9) anbringbar sind.

2. Fahrzeugrahmen nach Anspruch 1,
**dadurch gekennzeichnet,**
**dass** der Querträger (5) als U-Profil ausgestaltet ist, mit einem unteren Bodenabschnitt (17) und zwei seitlichen Wandabschnitten (18),
und **dass** über die beiden Wandabschnitte (18) jeweils seitlich hinausragende Auflagestreifen (15) vorgesehen sind, auf welchen jeweils ein Abschnitt (7) des Ladebodens (6) aufliegt.

3. Fahrzeugrahmen nach Anspruch 2,
**dadurch gekennzeichnet,**
**dass** die Auflagestreifen (15) in Anpassung an die Materialstärke des Ladeboden-Abschnitts (7) derart hoch an dem Querträger (5) angeordnet ist, dass der Ladeboden (6) bündig an die Oberkante des Querträgers (5) anschließt.

4. Fahrzeugrahmen nach einem der vorhergehenden Ansprüche,
**dadurch gekennzeichnet,**
**dass** der Querträger (5) nach unten offene Ablauföffnungen (14) aufweist.

5. Fahrzeugrahmen nach Anspruch 4,
**dadurch gekennzeichnet,**
**dass** die Ablauföffnungen (14) unterhalb der Ausnehmungen angeordnet sind.

6. Fahrzeugrahmen nach einem der vorhergehenden Ansprüche,
**dadurch gekennzeichnet,**
**dass** die Ausnehmungen, quer zum Fahrzeugrahmen (1) gesehen, beidseitig durch separate und mit dem Querträger (5) verbundene, einem in die Ausnehmung eingesetzten Sicherungselement (8) anliegende Führungselemente begrenzt sind.

7. Fahrzeugrahmen nach Anspruch 6,
**dadurch gekennzeichnet,**
**dass** der Querträger (5) aus Metall besteht und die Führungselemente mit dem übrigen Querträger (5) verschweißt sind.

8. Fahrzeugrahmen nach Anspruch 6 oder 7,
**dadurch gekennzeichnet,**
**dass** die Führungselemente als Bolzen (20) ausgestaltet sind,
wobei jeweils zwei Bolzen (20) übereinander und voneinander beabstandet angeordnet sind.

9. Fahrzeugrahmen nach einem der vorhergehenden Ansprüche,
**dadurch gekennzeichnet,**
**dass** der Querträger (5), in Längsrichtung des Fahrzeugrahmens (1) gesehen, Aussparungen (11) aufweist, welche in Anpassung an die Querschnittsgeometrie der Längsträger (4) ausgestaltet sind, derart, dass ein Längsträger (4) wenigstens bereichsweise in einer solchen Aussparung (11) aufnehmbar ist.

10. Fahrzeugrahmen nach Anspruch 9,
**dadurch gekennzeichnet,**
**dass** die Aussparungen (11) etwa T-förmig ausgestaltet sind.

11. Fahrzeugrahmen nach Anspruch 9 oder 10,
**dadurch gekennzeichnet,**
**dass** eine Aussparung (11) derart bemessen ist und dem darin aufgenommenen Längsträger (4) derart nahe ist, dass eine unmittelbare Verschweißung des Längsträgers (4) mit dem Querträger (5) ermöglicht ist.

12. Fahrzeugrahmen nach einem der vorhergehenden Ansprüche,
**dadurch gekennzeichnet,**
**dass** der Querträger (5) mit dem übrigen Fahrzeugrahmen (1) verschraubt ist.

13. Fahrzeugrahmen nach einem der vorhergehenden Ansprüche,
**dadurch gekennzeichnet,**
**dass** der Querträger (5) aus einem höherfesten Material besteht als die Längsträger (4).

14. Querträger (5) für einen Fahrzeugrahmen (1) nach einem der vorhergehenden Ansprüche.

## Claims

1. Motor vehicle frame,
with longitudinal and cross members (4, 5),
where cross members (5) are provided which cross members (5) have recesses which are open at the top and where securing elements (8) which serve to secure loads are provided,
where a large number of recesses is provided along the length of the cross member (5) to enable the securing elements (8) placed against the load (9) to be inserted into a recess in a cross member (5) from above,
and where a load-bearing surface (6) which is disposed at the same height or higher than the cross member (5) is provided to bear a load (9),
**characterised in that**
the motor vehicle frame (1) itself is designed to carry the securing elements (8),
where the securing elements (8) are constructed in the form of posts and
in their upright securing position are disposed in the recesses in the cross member (5)
and can be fitted optionally in front of, behind and/or next to the load (9).

2. Motor vehicle frame in accordance with claim 1,
**characterised in that**
the cross member (5) is construct as a U-section and with a bottom base portion (17) and two side portions (18),
and **in that** support strips (15) are provided, each of which support strips (15) projects sideways over the two side portions (18), on each of which side portions (18) a portion (7) of the load-bearing surface (6) rests.

3. Motor vehicle frame in accordance with claim 2,
**characterised in that**
the support strips (15) are in accordance with the thickness of the material of the loading surface portion (7) disposed high enough up the cross member (5) for the load-bearing surface (6) to lie flush with the upper edge of the cross member (5).

4. Motor vehicle frame in accordance with any one of the foregoing claims,
**characterised in that**
the cross member (5) incorporates drain openings (14) which are open at the bottom.

5. Motor vehicle frame in accordance with claim 4,
**characterised in that**
the drain openings (14) are disposed underneath the recesses.

6. Motor vehicle frame in accordance with any one of the foregoing claims,
**characterised in that**
the recesses, viewed sideways across the motor vehicle frame (1), are limited on both sides by separate guide elements joined to the cross member (5) and lying against a securing element (8) fitted in the recess.

7. Motor vehicle frame in accordance with claim 6,
**characterised in that**
the cross member (5) is made from metal and the guide elements are welded to the remaining cross member (5).

8. Motor vehicle frame in accordance with claim 6 or 7,
**characterised in that**
the guide elements are constructed as bolts (20),
where in each case two bolts (20) are disposed one above and apart from the other.

9. Motor vehicle frame in accordance with any one of the foregoing claims,
**characterised in that**
the cross member (5), viewed along the length of motor vehicle frame (1), has openings (11) which are constructed in accordance with the cross-sectional geometry of the longitudinal members (4) so that at least in certain areas a longitudinal member (4) can be fitted into such opening (11).

10. Motor vehicle frame in accordance with claim 9,
**characterised in that**
the openings (11) are constructed more or less T-shaped.

11. Motor vehicle frame in accordance with claim 9 or 10,
**characterised in that**
one opening (11) is so dimensioned and is disposed so close to the longitudinal member (4) mounted in it that the longitudinal member (4) can be directly welded to the cross member (5).

12. Motor vehicle frame in accordance with any one of the foregoing claims,
**characterised in that**
the cross member (5) is bolted to the remaining motor vehicle frame (1).

13. Motor vehicle frame in accordance with any one of the foregoing claims,
**characterised in that**
the cross member (5) is made from a higher-strength material than the longitudinal members (4).

14. Cross member (5) for a motor vehicle frame (1) in accordance with any one of the foregoing claims.

## Revendications

1. Châssis de véhicule
comportant des longerons et entretoises (4, 5),
sachant que sont prévues des entretoises (5) présentant des évidements ouverts vers le haut,
et que sont prévus des éléments de sécurisation (8) servant à sécuriser le chargement,
sachant que l'entretoise (5) comporte prévus, sur sa longueur, un grand nombre d'évidements,
de sorte que les éléments de sécurisation (8) sont enfichables par le haut, limitrophes du chargement (9), dans un évidement d'une entretoise (5),
et sachant qu'une surface (6) est prévue pour recevoir le chargement (9), surface qui se trouve à la même hauteur ou plus haut que les entretoises (5),
**caractérisé en ce que**
le châssis (1) lui-même du véhicule est configuré pour recevoir les éléments de sécurisation (8),
sachant que les éléments de sécurisation (8) sont configurés en poteaux,
que lorsque en position verticale de sécurisation ils sont disposés dans les évidements de l'entretoise (5),
et qu'il est possible de les monter au choix devant, derrière le chargement (9) et/ou sur les côtés de ce dernier.

2. Châssis de véhicule selon la revendication 1.
**caractérisé en ce que**
l'entretoise (5) a la forme d'un profilé en U, avec un segment inférieur (17) de fond et deux segments latéraux (18) servant de parois,
et **en ce qu'**au dessus des deux segments (18) parois ont été prévus des bandeaux d'appui (15) saillant chacun latéralement, sur lesquels prend appui chaque fois un segment (7) de la surface (6) de chargement.

3. Châssis de véhicule selon la revendication 2,
**caractérisé en ce que**
les bandeaux d'appui (15) sont disposés, pour les adapter à l'épaisseur du matériau composant le segment (7) de la surface de chargement, à une hauteur telle contre l'entretoise (5) que ladite surface (6) de chargement affleure avec l'arête supérieure de l'entretoise (5).

4. Châssis de véhicule selon l'une des revendications précédentes,
**caractérisé en ce que**
l'entretoise (5) présente des orifices d'écoulement (14) ouverts vers le bas.

5. Châssis de véhicule selon la revendication 4,
**caractérisé en ce que**
les orifices d'écoulement (14) sont agencés en dessous des évidements.

6. Châssis de véhicule selon l'une des revendications précédentes,
**caractérisé en ce que**
les évidements, observés transversalement au châssis (1) du véhicule, sont limités des deux côtés par des éléments de guidage séparés et reliés avec l'entretoise (5), limitrophes d'un élément de sécurisation (8) introduit dans l'évidement.

7. Châssis de véhicule selon la revendication 6,
**caractérisé en ce que**
l'entretoise (5) est en métal et que les éléments de guidage ont été soudés avec le reste de l'entretoise (5).

8. Châssis de véhicule selon la revendication 6 ou 7,
**caractérisé en ce que**
les éléments de guidage ont la forme de goujons (20),
sachant que chaque fois deux goujons (20) sont agencés l'un au dessus de l'autre, et à une certaine distance l'un de l'autre.

9. Châssis de véhicule selon l'une des revendications précédentes,
**caractérisé en ce que**
l'entretoise (5) observée dans le sens longitudinal du châssis (1) du véhicule présente des évidements (11) qui, pour les adapter à la géométrie de la section des longerons (4), ont été configurés de sorte qu'un longeron (4) puisse pénétrer au moins localement dans un tel évidement (11).

10. Châssis de véhicule selon la revendication 9,
**caractérisé en ce que**
les évidements (11) ont approximativement la forme d'un T.

11. Châssis de véhicule selon la revendication 9 ou 10,
**caractérisé en ce qu'**un
évidement (11) est dimensionné de telle sorte, et que le longeron (4) logé dedans est proche à un tel point, qu'il est possible de souder directement le longeron (4) avec l'entretoise (5).

12. Châssis de véhicule selon l'une des revendications précédentes,
**caractérisé en ce que**
l'entretoise (5) est vissée contre le reste du châssis (1) du véhicule.

13. Châssis du véhicule selon l'une des revendications précédentes,
**caractérisé en ce que**
l'entretoise (5) se compose d'un matériau présentant une résistance supérieure
à celle des longerons (4)

14. Entretoise (5) destinée à un châssis (1) de véhicule selon l'une des revendications précédentes.
